# EUROPÄISCHE PATENTSCHRIFT

(11) **EP 2 514 580 B1**
(45) Veröffentlichungstag und Bekanntmachung des Hinweises auf die Patenterteilung: **09.08.2017**
(21) Anmeldenummer: 12002628.1
(22) Anmeldetag: 14.04.2012
(51) Int. Cl.: B29C 47/08, B29C 47/92, B29C 55/28, B29C 47/34

(54) **Verfahren zur Dickenprofilregelung von Blasfolien**
Method for regulating the thickness profile of blow films
Procédé de réglage du profil d'épaisseur de films de soufflage

(30) Priorität: 20.04.2011 DE 102011018320
(43) Veröffentlichungstag der Anmeldung: 24.10.2012
(73) Patentinhaber: HOSOKAWA ALPINE Aktiengesellschaft, 86199 Augsburg (DE)
(72) Erfinder: Bayer, Bernd, 86399 Bobingen (DE)

(56) Entgegenhaltungen:
- EP-A1- 0 823 319
- EP-A1- 2 277 681
- GB-A- 2 124 966
- US-A- 5 162 089
- US-A- 5 178 806
- US-A- 5 202 068

## Beschreibung

Die Erfindung betrifft ein Verfahren zur Regelung des Foliendickenprofils von in Folienblasanlagen hergestellten ein- oder mehrschichtigen Schlauchfolien durch erfassen des Dickenprofils des Folienschlauches, anschließendem Vergleich des erfassten Istprofils mit dem vorgegebenen Sollprofilen, zur Erzeugung einer Regelgröße zum Beeinflussen des Dickenprofils des herzustellenden Folienschlauchs. Für die Herstellung von Schlauchfolien ist das Folienblasverfahren geeignet. Hierzu wandelt ein oder mehrere Extruder Kunststoffgranulat in Kunststoffschmelze welche dann dem Blaskopf zugeführt wird. Aus einer ringförmigen Düse wird dann ein Schmelzeschlauch gezogen. Ein oder mehrere Kühlringe kühlen die Schmelze, es entsteht ein Folienschlauch welcher einer Flachlegung zugeführt, über einen reversierenden Wendeabzug gezogen und dann in einem Wickler aufgewickelt wird. Diese Folien finden z. B. Einsatz in der flexiblen Verpackung.

### Stand der Technik

In der DE 100 47 836 A1 ist ein Verfahren zur Regelung von Foliendickenprofilen in Folienblasanlagen speziell auf der Grundlage der Messung einer oder mehrerer einzelner Schichtdicken einer Mehrschichtfolie als Regelgröße beschrieben. Die Messung des Foliendickenprofils über den Umfang der Schlauchfolie erfolgt dabei zwischen Folienblaskopf und Flachlegung. Wie im Stand der Technik üblich wird dazu das gemessene Dickenprofil mit dem Sollprofil verglichen und bei Abweichungen angemessene Regeleingriffe in den Folienblasprozess vorgenommen. Die Beeinflussung des Dickenprofils erfolgt über Temperieren des austretenden Folienschlauchs oder des Ringdüsenwerkzeugs. Die Regelung erfolgt vorzugsweise segmentweise über den Umfang der Folienschlauches oder des Blaskopfes, dadurch lässt sich das Dickenprofil derart regeln, das die Foliendicke über den gesamten Umfang der Schlauchfolie möglichst gleichmäßig ist.

Die Regelung gestaltet sich einfach, da immer eine direkte Zuordnung von der Folie zu der Düse bzw. den Regelzonen gegeben ist.

Diese Art der Regelung der Foliendicke über den Umfang der Schlauchfolie reicht bei vielen Anforderungen nicht aus. Deshalb ist es bisher notwendig, um eine gute Rollenqualität der aufgewickelten Folie zu erhalten, über die Rotationseinheit des Wendeabzugs mechanisch alle Profilpunkte über die Rollenbreite zu verlagern, so dass sich Dünn- und Dickstellen der Folien auf der Rolle ausgleichen. Dies wird bisher nur über eine aufwendige mechanische Konstruktion des rotierenden Wendeabzugs oder alternativ des rotierenden Wicklers oder des rotierenden Blaskopfes gelöst. Über die Rotationsgeschwindigkeit und den Rotationswinkel des Wendeabzugs wird die Rollenqualität beeinflusst. Diese mechanische Verlagerung hat durch die mechanische Beanspruchung der Folie z.B. Einfluss auf Faltenbildung, Foliendefekte, Durchhänger, Oberflächenfehler der Folie.

Die US 5,162,089 A und die US 5,178,806 A offenbaren ist ein Verfahren zur Herstellung von Kunststofffolien, bei dem im Wechsel Folie mit systematischen Dickenfehlerprofil und inversem Dickenregelprofil erzeugt wird um eine Folienrolle mit möglichst zylindrischer Form zu erhalten.

In der EP 2 277 681 A1 ist ein Verfahren zur Regelung von gereckter Blasfolie beschrieben. Diese Folie wird im Blasverfahren hergestellt, im reversierenden Wendeabzug flachgelegt und anschließend in einer Reckanlage monoaxial in Maschinenrichtung verstreckt. Hierbei wird das Foliendickenprofil der in der Folienblasanlage hergestellten Schlauchfolie so eingestellt, dass nach dem Recken, durch Abweichungen während des Verstreckens, eine Folie mit über die gesamt Folienbreite einheitlichen Foliendickenprofil entsteht.

Die GB 2 124 966 A offenbart ein Folienblasverfahren bei dem Dick-Dünnstellen-Verlagerung über einen rotierenden Folienblaskopf erfolgt.

Der Einfindung liegt daher die Aufgabe zugrunde, eine Lösung zu Schaffen, die es ermöglicht, eine in einer Folienblasanlage mit Rotationseinheit hergestellten Schlauchfolie durch eine Regelung der Foliendicke so zu beeinflussen, dass die Endfolie ein gleichmäßiges Dickenprofil aufweist und damit auch eine sehr gute Rollenqualität mit hoher Zylindrizität erzielt werden kann.

Die Aufgabe wird erfindungsgemäß durch die Merkmale im Kennzeichnungsteil des Anspruchs 1 gelöst.

Bei einem Verfahren zur Regelung des Foliendickenprofils der eingangs beschriebenen Art, wird die Aufgabe erfindungsgemäß dadurch gelöst, dass die Regelung zur Erzeugung der Regelgröße eine kaskadierte Regelung aus einer Überlagerung eines Grundprofils, eines Rollenprofil und eines Streuprofils umfasst, wobei der Rotationswinkel und die Rotationsgeschwindigkeit des Wendeanzugs oder des Blaskopfs oder des Wicklers kleiner sind, als der Rotationswinkel und die Rotationsgeschwindigkeit des Wendeanzugs oder des Blaskopfs oder des Wicklers die notwendig sind, wenn der Regelung kein Streuprofil überlagert wird, so dass eine gute Rollenqualität mit hoher Zylindrizität erzielt wird.

### Beschreibung der Erfindung

Bei dem erfindungsgemäßen Verfahren zur Regelung der Foliendicke von im Folienblasverfahren hergestellten Schlauchfolien, wird das Foliendickenprofil im Folienblasprozess so eingestellt, dass nicht nur die Folien über ihren Umfang bzw. ihre Liegebreite ein möglichst gleichmäßiges Dickenprofil aufweist, sondern auch dass eine Folienrolle erzeugt wird, welche ein Rollenprofil aufweist, das eine möglichst geringe Abweichung in der Zylindrizität aufweist. Gleichzeitig wird dadurch erreicht, dass die Faltenneigung, Durchhänger, Oberflächenfehler und Foliendefekte der Folie hervorgerufen durch die mechanische Beanspruchung durch die rotierenden Einheiten minimiert werden.

Die Foliendicke wird im Bereich zwischen Folienblaskopf und Flachlegeeinheit über den Umfang mittels einer Messeinrichtung erfasst. Alternativ kann auch die Foliendicke über die Liegebreite erfasst werden, wenn die Foliendicke im Bereich nach der Flachlegung und vor dem Wickler gemessen wird.

In einem ersten Regelkreis erfolgt ein Vergleich des Istprofils mit dem Grundsollprofil. Bei Abweichungen werden definierte Regeleingriffe in den Folienblasprozess vorgenommen. Wie dies aus dem Stand der Technik bekannt ist, werden hier Foliendickenprofilregelsysteme eingesetzt. Die Beeinflussung des Dickenprofils erfolgt z.B. über die segmentierten Regelzonen in einem oder mehreren Kühlringen durch Lufttemperierung oder Luftvolumenregelung. Alternativ kann die Beeinflussung des Dickenprofils durch Regelzonen im Blaskopf erfolgen. Hierbei kommen z.B. Heizpatronen zum Einsatz.
Zusätzlich wird den segmentierten Regelzonen über einen Versatz das Ist-Profil zugeordnet, dieser berücksichtigt den Winkelversatz aus dem Foliendrall. Dieser ergibt sich beim Austreten der Schmelze aus dem Blaskopf, da diese über sogenannte Wendelverteiler in einem Ringspalt bis zur Düse gefördert wird.

Die Schlauchfolie wird nach dem Erkalten in einer Abzugseinrichtung flachgelegt und über ein Abzugswalzenpaar geführt. Die entstehenden Ränder der Folie müssen den Stellgliedern der Profilregeleinheit zugeordnet werden. Über einen manuellen oder vorzugsweise einen automatischen Kalibrieralgorithmus werden die Seitenränder dem Stellgliedern der Profilregeleinheit zugeordnet. Es erfolgt eine Zuordnung eines bzw. mehrerer Umfangpunkte der im Abzug flachgelegten Schlauchfolie zu einer bzw. mehreren der segmentierten Regelzonen.

So kann das vorgegebene Dickensollprofil für den Folienblasprozess aus den Werten der Messeinrichtung welche das Dickenistprofil über den Folienumfang misst über einen Algorithmus errechnet werden.

Aus dem Dickenistprofil, welches in der Messeinrichtung erfasst wird, kann die Foliendicke über die Wickelbreite und über die Länge des Schlauchfolie ermittelt werden und summatorisch auf das Rollenprofil hochgerechnet werden. Bei Entstehen der sogenannten Kolbenringe auf dem Wickel kann ein Regeleingriff vorgenommen werden, so dass die Solldickenverlagerung über die Folienbreite angepasst wird. Es wird so die Foliendickenänderung über die Folienbreite kompensiert. Grundlage dafür ist eine Zuordnung eines oder mehrerer Umfangspunkte der flachgelegten Schlauchfolie (6) zu einer oder mehreren Regelzonen im Regelalgorithmus zur Steuerung der segmentierten Regelzonen (7).

Um die Rollenqualität weiter zu erhöhen und deren Zylindrizität zu verbessern und die Foliendicke über den Umfang weiter zu vergleichmäßigen, wird ein weiteres Profil überlagert das sogenannte Streuprofil. Das Streusollprofil kann manuell oder durch einem Algorithmus berechnet werden und dem Regelsystem zugeführt werden. Das Streuprofil stellt eine fest Funktion (Sägezahnprofil, Sinusprofil) oder eine durch einen Algorithmus berechnete Funktion dar. Es soll so eine Dick-Dünnstellen-Verlagerung, um den Umfang der Folie, ähnlich der aus einer Wendestangeneinheit, erzeugt werden.

Durch die Streuprofilregelung kann ein Teil oder die komplette Aufgabe des rotierenden Wendeabzugs übernommen werden. Der Wendeabzug kann mit kleinen Rotationswinkeln und Rotationsgeschwindigkeiten gefahren werden. Es erfolgt eine Optimierung zwischen Streuprofilregelung, Winkeleinstellung und Rotationsgeschwindigkeit des Wendeabzugs hinsichtlich der Zylindrizität der Folienrolle.

Im Idealfall wird die mechanische Dick-Dünnstellenverlagerung durch den Wendeabzug komplett durch die Regelung ersetzt und der rotierende Wendeabzug kann entfallen.

Die Regelung zur Ansteuerung der einzelnen Regelzonen kann aus einer Überlagerung der nachfolgend genannten Dickenprofile über einen Algorithmus berechnet werden. Die Regelzonen können im Blaskopf, im Kühlring oder in einer eigenständigen Stellgliedeinheit integriert sein.

Die Dickenprofile sind:
- das Grundprofil: welches das Dickenistprofil am Umfang der Schlauchfolie darstellt
- das Rollenprofil: welches aus dem Dickenistprofil das Dickenprofil der Folienbreite und durch Summation dieser das Rollenprofil hochrechnet, d.h. Rollendurchmesser über Rollenbreite.
- das Streuprofil: welches eine feste Funktion oder eine durch einen Algorithmus berechnete Funktion darstellt. Es wird dadurch eine Dick-Dünnstellen-Verlagerung ähnlich der aus einer Wendestangeneinheit erzeugt.

Dies stellt eine kaskadierte Regelung dar, da folgende Regelkreise überlagert sind:
- Regelung der Foliendicke über den Schlauchfolienumfang während des Folienblasprozesses
- Regelung der Wickeldurchmesser über die Wickelbreite
- Regelung der Dick-Dünnstellen-Verlagerung über die Wickelbreite durch das Streuprofil.

Das Verfahren zur Regelung der Foliendicke kommt in Anlagen zum Einsatz, bei denen ein Wendeabzug installiert ist. Hier wird das Dickensollprofil derart verändert, das bei kleinen Einstellwerten des Rotationswinkel und der Rotationsgeschwindigkeit des Wendeabzugs das Ergebnis des Folienwickels mit gleichmäßigem Durchmesser über die Wickelbreite entsteht ohne Fehlstellen durch mechanische Beanspruchung. Alternativ kann das System auch bei Anlagen mit rotierendem Wickler oder rotierendem Blaskopf eingesetzt werden.

Der Folienschlauch kann auch geblock oder nichtgebrockt den Wicklern zugeführt werden.

Die Schlauchfolie kann als Folienschlauch, ein- oder beidseitig aufgeschnitten werden und dem oder den Wicklern zugeführt werden.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der -beispielsweise- ein bevorzugtes Ausführungsbeispiel der Erfindung dargestellt ist.

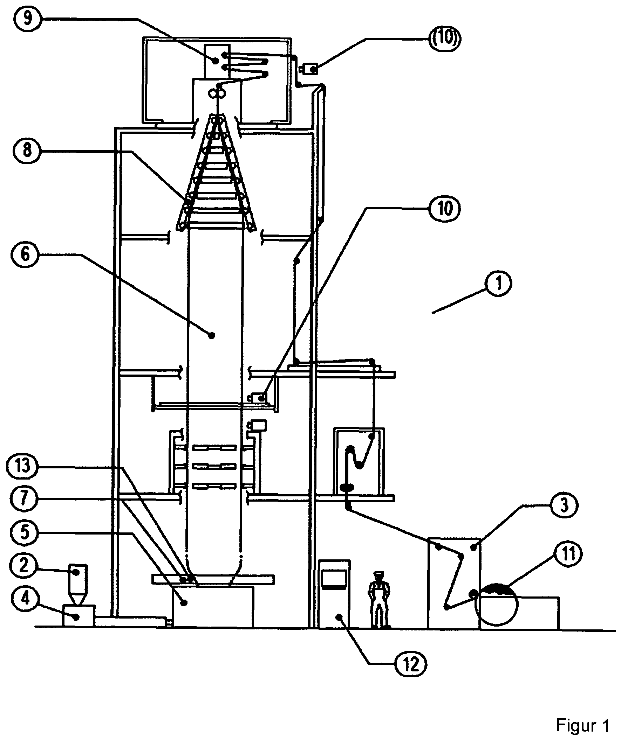

**Figur 1****:** Folienblasanlage in der das erfindungsgemäße Verfahren zur Regelung der Foliendickenprofils Anwendung findet.

Die Figur 1 zeigt eine Folienblasanlage (1) mit Folienblaskopf (5), Abzugsvorrichtung (8), Wendeabzug (9) und Wickler (3). Über eine Dosiervorrichtung (2) wird das zu verarbeitende Kunststoffgranulat einem Extruder (4) zugeführt, in diesem aufgeschmolzen, homogenisiert und dem Folienblaskopf (5) zugeführt. Bei der Herstellung von Mehrschichtfolien kommen entsprechend der Schichtzahl mehrere Extruder zum Einsatz. Der Folienblaskopf (5) weist eine Ringdüse auf, aus der die extrudierte Kunststoffmasse austritt. Durch den Folienblaskopf (5) erfolgt eine Zuleitung von Kühlluft zum Aufblasen der Schlauchfolie (6). Die Schlauchfolie (6) wird über den Kühlring (7) von außen gekühlt.
Im Kühlring (7) ist die segmentierte Regelzone (13) angeordnet. Nach dem Erstarren des Kunststoffs wird die Schlauchfolie (6) in der Abzugsvorrichtung (8) flachgelegt, über einen Wendeabzug (9) geführt und anschließend den Wicklern (6) zugeführt und zu Folienwickeln (11) aufgerollt.

Die Schlauchfolie kann flachgelegt, geblockt oder nicht geblockt oder nach dem Flachlegen ein- oder beidseitig aufgeschnitten der oder den Wickelstellen zugeführt werden.

Zu Regelung des Foliendickenprofils ist die Erfassung des Folienistprofils, vorzugsweise an einer Stelle erforderlich. Das Foliendickenprofil am Umfang der Schlauchfolie (6) wird zwischen Folienblaskopf (5) und Flachlegung an der Messeinrichtung (10) erfasst. Die Messeinrichtung (10) kann alternativ zwischen Abzugsvorrichtung (8) und Wickler (3) angeordnet sein, dann erfasst sie das Folienprofil über die Folienbreite.

Über die Anlagensteuerung (12) wird der gesamte Folienblasvorgang geregelt, insbesondere die Antriebe, die Kühlluft, die segmentierte Regelzone, die sich im Kühlring, im Folienblaskopf oder nachfolgend befindet. Auch die Abzugsgeschwindigkeit der Schlauchfolie wird von der Anlagesteuerung geregelt.

Das von der Messeinrichtung (10) gemessene Folienistprofil wird der Anlagensteuerung (12) zugeführt und durch ein Soll-/Ist-Vergleich Signale an die segmentierte Regelzone (13) weitergegeben.

### Bezugszeichen:

- 1: Folienblasanlage
- 2: Dosiervorrichtung
- 3: Wickler
- 4: Extruder
- 5: Folienblaskopf
- 6: Schlauchfolie
- 7: Kühlring
- 8: Abzugsvorrichtung
- 9: Wendeabzug
- 10: Messeinrichtung
- 11: Wickel
- 12: Anlagensteuerung
- 13: segmentierte Regelzone

## Patentansprüche

1. Verfahren zur Regelung des Foliendickenprofils von in Folienblasanlagen hergestellten ein- oder mehrschichtigen Schlauchfolien durch erfassen des Dickenprofils des Folienschlauches, anschließendem Vergleich des erfassten Istprofils mit dem vorgegebenen Sollprofilen, zur Erzeugung einer Regelgröße zum Beeinflussen des Dickenprofils des herzustellenden Folienschlauchs wobei die Regelung zur Erzeugung der Regelgröße eine kaskadierte Regelung aus einer Überlagerung folgender Profile umfasst:
- ein Grundprofil, welches die Dicke der extrudierte Schlauchfolie über den Schlauchfolienumfang auf ein vorgegebenes Dickensollprofils mittels eines Foliendickenprofilregelsystem regelt,
- ein Rollenprofil, welches die Foliendicke über die Wickelbreite summatorisch über die Länge des Schlauchs erfasst und bei Entstehen von Kolbenringen auf dem Wickel ein Regeleingriff vorgenommen wird, sodass die Solldickenverlagerung über die Folienbreite angepasst wird, **dadurch gekennzeichnet, dass** das überlagerte Profil zusätzlich
- ein Streuprofil umfasst, welches eine feste Funktion oder eine durch einen Algorithmus berechnete Funktion darstellt und eine Dick-Dünnstellen-Verlagerung über den Folienumfang erzeugt wird,
wobei der Rotationswinkel und die Rotationsgeschwindigkeit des Wendeanzugs oder des Folienblaskopfs oder des Wicklers kleiner sind, als der Rotationswinkel und die Rotationsgeschwindigkeit die notwendig sind, wenn der Regelung kein Streuprofil überlagert wird.

2. Verfahren zur Regelung der Foliendicke nach Anspruch 1, **dadurch gekennzeichnet, dass** die Regelung zur Erzeugung der Regelgröße eine kaskadierte Regelung aus einer Überlagerung eines Grundprofils, eines Rollenprofil und eines Streuprofils umfasst, wobei der Rotationswinkel und die Rotationsgeschwindigkeit des Wendeabzugs gleich null ist und entfällt.

3. Verfahren zur Regelung der Foliendicke nach Anspruch 1, **dadurch gekennzeichnet, dass** die Regelung zur Erzeugung der Regelgröße eine kaskadierte Regelung aus einer Überlagerung eines Grundprofils, eines Rollenprofil und eines Streuprofils umfasst, wobei der Rotationswinkel und die Rotationsgeschwindigkeit des Folienblaskopfes oder des Wicklers gleich null sind.

4. Verfahren zur Regelung der Foliendicke nach einem oder mehreren der vorangegangenen Ansprüche **dadurch gekennzeichnet, dass** eine Zuordnung eines oder mehrerer Umfangspunkte der flachgelegten Schlauchfolie (6) zu einer oder mehreren Regelzonen im Regelalgorithmus zur Steuerung der segmentierten Regelzone (7) berücksichtigt wird.

5. Verfahren zur Regelung der Foliendicke nach einem oder mehreren der vorangegangenen Ansprüche **dadurch gekennzeichnet, dass** das vorgegebene Dickensollprofil über einen Algorithmus aus den Werten einer Messeinrichtung, welche die Foliendicke vor der Abzugsvorrichtung in Maschinenrichtung über den Folienumfang misst, geregelt wird.

6. Verfahren zur Regelung der Foliendicke nach einem oder mehreren der vorangegangenen Ansprüche **dadurch gekennzeichnet, dass** das vorgegebene Dickensollprofil über einen Algorithmus aus den Werten einer Messeinrichtung, welche die Foliendicke nach der Abzugsvorrichtung in Maschinenrichtung über die gesamte Folienbreite misst, geregelt wird.

## Claims

1. Process for regulating the film thickness profile of single-layer or multi-layer tubular film produced with film blowing lines by detecting the thickness profile of the film tube, subsequently comparing the detected actual profile with the specified set-point profiles in order to generate a control variable which permits influencing the thickness profile of the film tube to be produced, whereby the control process to generate the control variable comprises a cascading control process based on superposition of the following profiles:
- a basic profile which adjusts the thickness of the extruded film tube around the film tube circumference to a specified thickness set-point profile by means of a film thickness profile control system,
- a roll profile which measures the film thickness across the roll width summated over the length of the tube and should gauge bands develop on the reel, a control operation is performed so that the set-point thickness displacement is adjusted across the entire film width,
**characterised in that**
the superimposed profile also includes a scatter profile in addition which constitutes a fixed function or a function calculated by means of an algorithm, and a thick-thin spots displacement is generated across the film circumference, whereby the rotation angle and the rotation velocity of the oscillating take-off unit or of the film die head or of the winder are less than the rotation angle and rotation velocity necessary if the control process is not superimposed by a scatter profile.

2. Process to regulate the film thickness in accordance with Claim 1, **characterised in that** the control process to generate the control variable is a cascaded control process based on superposition of a basic profile, a roll profile and a scatter profile, whereby the rotation angle and rotation velocity of the oscillating take-off unit is as good as nil and can therefore be omitted.

3. Process to regulate the film thickness in accordance with Claim 1, **characterised in that** the control process to generate the control variable is a cascaded control process based on superposition of a basic profile, a roll profile and a scatter profile, whereby the rotation angle and rotation velocity of the film die head or the winder are practically nil.

4. Process to regulate the film thickness in accordance with one or more of the above claims, **characterised in that** an assignment of one or several circumferential points of the laid-flat film tube (6) to one or several of the control zones in the control algorithm designed to control the segmented control zone (7) is taken into account.

5. Process to regulate the film thickness in accordance with one or more of the above claims, **characterised in that** the specified set-point thickness profile is regulated by means of an algorithm calculated from the values of a measuring system which measures the film thickness upstream of the take-off unit in machine direction around the film circumference.

6. Process to regulate the film thickness in accordance with one or more of the above claims, **characterised in that** the specified set-point thickness profile is regulated by means of an algorithm calculated from the values of a measuring system which measures the film thickness downstream of the take-off unit in machine direction across the entire film width.

## Revendications

1. Processus de régulation du profil d'épaisseur de films tubulaires mono- ou multicouches fabriqués dans des installations de soufflage, par mesure du profil d'épaisseur du film tubulaire, puis comparaison du profil actuel mesuré avec le profil nominal prédéterminé, pour la production d'une variable de régulation pour influencer le profil d'épaisseur du tube de film à fabriquer, la régulation permettant de produire cette variable étant une régulation en cascade à partir de la superposition des profils suivants :
- un profil de base qui régule l'épaisseur du film tubulaire extrudé sur tout le périmètre de film tubulaire à partir d'un profil nominal prédéterminé par l'intermédiaire d'un système de régulation d'épaisseur de profil de film,
- un profil de rouleau qui mesure l'épaisseur de film sur la largeur de bobinage en le sommant sur la longueur du rouleau, et en cas d'apparition de surépaisseurs sur la bobine, intervient sur la régulation pour que le transfert d'épaisseur nominale soit adapté sur la largeur de film,
**caractérisé par le fait que**
le profil superposé comprend également un profil de dispersion représentant une fonction fixe ou une fonction calculée par un algorithme, et produisant un transfert entre les endroits épais et les endroits minces sur le périmètre du film, l'angle de rotation et la vitesse de rotation du tireur réversible ou de la tête de soufflage de film ou de l'enrouleur étant plus petits que l'angle de rotation et la vitesse de rotation nécessaires lorsqu'aucun profil de dispersion n'est superposé à la régulation.

2. Processus de régulation de l'épaisseur de film selon la revendication 1, **caractérisé par le fait que** la régulation de production de la variable de régulation est une régulation en cascade à partir de la superposition d'un profil de base, d'un profil de rouleau et d'un profil de dispersion, l'angle de rotation et la vitesse de rotation du tireur réversible étant nuls et donc disparaissant.

3. Processus de régulation de l'épaisseur de film selon la revendication 1, **caractérisé par le fait que** la régulation de production de la variable de régulation est une régulation en cascade à partir de la superposition d'un profil de base, d'un profil de rouleau et d'un profil de dispersion, l'angle de rotation et la vitesse de rotation de la tête de soufflage de film ou de l'enrouleur étant nuls.

4. Processus de régulation de l'épaisseur de film selon une ou plusieurs des revendications précédentes **caractérisé par le fait qu'**une affectation d'un ou plusieurs points de périmètre du film tubulaire mis à plat (6) à une ou plusieurs zones de régulation soit prise en compte dans l'algorithme de régulation pour le pilotage de la zone de régulation segmentée (7).

5. Processus de régulation de l'épaisseur de film selon une ou plusieurs des revendications précédentes **caractérisé par le fait que** le profil d'épaisseur nominal prédéterminé est régulé par un algorithme à partir des valeurs d'un dispositif qui mesure l'épaisseur de film avant l'installation de tirage dans le sens de la machine sur le périmètre du film.

6. Processus de régulation de l'épaisseur de film selon une ou plusieurs des revendications précédentes **caractérisé par le fait que** le profil d'épaisseur nominal prédéterminé est régulé par un algorithme à partir des valeurs d'un dispositif qui mesure l'épaisseur de film après l'installation de tirage dans le sens de la machine sur toute la largeur du film.
